## Europäisches Patentamt

## European Patent Office

## Office européen des brevets

(11) Veröffentlichungsnummer: **0 058 764**
A2

(12) # EUROPÄISCHE PATENTANMELDUNG

(21) Anmeldenummer: 81109424.2

(22) Anmeldetag: 30.10.81

(51) Int. Cl.³: **H 04 B 9/00,** H 04 L 5/14, H 04 B 1/00

(30) Priorität: 23.02.81 DE 3106682

(43) Veröffentlichungstag der Anmeldung: **01.09.82** **Patentblatt 82/35**

(84) Benannte Vertragsstaaten: **AT BE CH DE FR GB IT LI NL SE**

(71) Anmelder: **SIEMENS AKTIENGESELLSCHAFT Berlin und München, Postfach 22 02 61, D-8000 München 22 (DE)**

(72) Erfinder: **Anders, Alois, Dipl.-Ing., Balanstrasse 187, D-8000 München 90 (DE)**

(54) **Nachrichtenübertragungssystem für Duplex-Betrieb über eine Lichtleitfaser.**

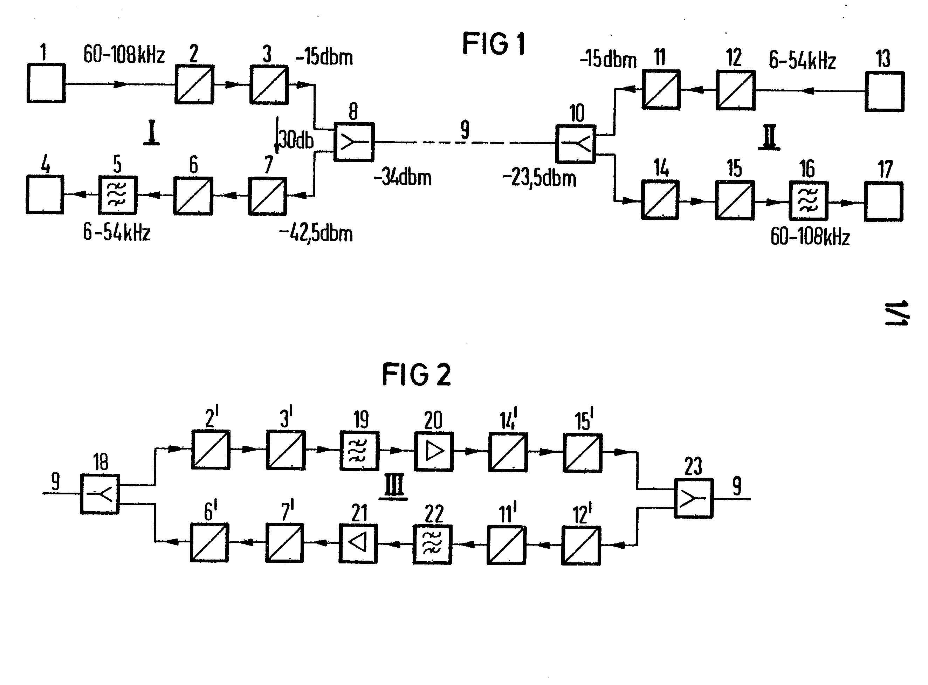

(57) Die Erfindung bezieht sich auf ein Nachrichtenübertragungssystem mit einer Übertragung in beiden Übertragungsrichtungen jeweils in einer anderen Frequenzlage. Erfindungsgemäß sind die Sendeteile (1, 13) und die Empfangsteile (4, 17) beider Endstellen (I, II) über optische Verzweiger (8, 10) mit einer einzigen Lichtleitfaser (9) als Übertragungsmedium verbunden. ·Optische Überkopplungen zwischen den Abzweigungs-Anschlüssen der optischen Verzweiger (8, 10) werden durch ein Filter (5, 16) im benachbarten Empfanggsweg eliminiert. Als Sendeteile (1, 13) und Empfangsteile (4, 17) können beispielsweise Trägerfrequenzsysteme Z12 oder Z60 dienen (Fig. 1). Zwischenstellen (III) können entsprechend mit optischen Verzweigern (18, 23) und Filtern (19, 22) ausgerüstet werden (Fig. 2). Das erfindungsgemäße System ist besonders für Elektrizitätsversorgungsunternehmen geeignet, da ein Kabel mit Lichtleitfasern unmittelbar von Störspannungen unbeeinflußt neben Stromversorgungsleitungen verlegt werden kann und gleichzeitig die vertrauten Trägerfrequenzsysteme eingesetzt werden können.

0058764

SIEMENS AKTIENGESELLSCHAFT    Unser Zeichen:
Berlin und München           VPA 81 P 6 4 2 1 E

Nachrichtenübertragungssystem für Duplex-Betrieb
über eine Lichtleitfaser

Die Erfindung bezieht sich auf ein Nachrichtenübertragungssystem mit einer ersten Endstelle, deren Sendeteil Signale in einer ersten Frequenzlage aussendet und deren Empfangsteil Signale in einer zweiten Frequenzlage empfängt, und mit einer zweiten Endstelle, deren Sendeteil Signale in der zweiten Frequenzlage aussendet und deren Empfangsteil Signale in der ersten Frequenzlage empfängt.

Ein derartiges Nachrichtenübertragungssystem ist aus der DE-OS 28 07 785 bekannt. Bei diesem digitialen System werden in jeder Endstelle der Sendeteil und der Empfangsteil über eine Gabel mit einer als Übertragungsmedium dienenden Zweidrahtleitung verbunden. Zur Umsetzung der Signale von einer Frequenzlage in eine andere dienen Frequenzumsetzer, die Modulatoren oder Codeumsetzer sein können.

23. Febr. 1981 - Wke 1 Wis

Aus der Zeitschrift "Siemens Components", 18 (1980) 3, Seiten 144 bis 150, insbesondere Bild 22 ist schließlich eine Datenübertragung im Duplex-Betrieb über eine Lichtleitfaser bekannt. Diese mündet beiderseits in einen optischen 3-Tor-Verzweiger, an die sich elektrooptische bzw. opto-elektrische Umsetzer anschließen.

Der Erfindung liegt die Aufgabe zugrunde, ein Trägerfrequenzsystem mit Leitungsausrüstung zu realisieren, das insbesondere für Elektrizitätsversorgungsunternehmungen geeignet ist, weil es gegen die bei diesen auftretenden typischen Störspannungen unempfindlich ist.

Ausgehend von einem Nachrichtenübertragungssystem der einleitend geschilderten Art wird diese Aufgabe erfindungsgemäß dadurch gelöst, daß als Übertragungsmedium eine Lichtleitfaser vorgesehen ist, daß an jedem Ende dieser Lichtleitfaser ein optischer Verzweiger mit seinem gemeinsamen Anschluß angeschlossen ist, daß jeder Sendeteil über einen FM-Modulator und einen elektrooptischen Umsetzer mit einem Abzweigungs-Anschluß des zugeordneten optischen Verzweigers verbunden ist, daß der andere Abzweigungs-Anschluß beider optischer Verzweiger über einen opto-elektrischen Umsetzer und einen FM-Demodulator mit dem zugeordneten Empfangsteil verbunden ist und daß zwischen diesem anderen Abzweigungs-Anschluß beider optischer Verzweiger und den zugeordneten Empfangsteilen jeweils entweder im elektrischen Weg ein elektrisches oder im optischen Weg ein optisches Filter zur Sperrung der Frequenzlage der Gegenrichtung vorgesehen ist.

Die Anwendung dieses neuen Nachrichtenübertragungssystems ist jedoch nicht auf die Übertragung trägerfrequenter Signale beschränkt. Ebenso können digitale Signale übertragen werden, die beispielsweise mittels Codeumsetzern in die gewünschte Frequenzlage gebracht wurden.

Die Frequenzmodulation ist von Vorteil, weil mit dieser das Rausch-Klirrverhältnis der elektro-optischen bzw. opto-elektrischen Umsetzer eliminierbar ist.

Sind längere Strecken zu überbrücken, so ist es vorteilhaft, wenn längs der einen Lichtleitfaser Zwischenstellen vorgesehen sind, in denen ein eingangs- und ein ausgangsseitiger optischer Verzweiger zwei Übertragungswege gegensätzlicher Übertragungsrichtung bilden, in denen Mittel zur Verstärkung und/oder Regeneration und elektrische oder optische Filter zur Sperrung der Frequenzlage der Gegenrichtung vorgesehen sind.

Bei der praktischen Realisierung des erfindungsgemäßen Nachrichtenübertragungssystems kann beispielsweise von den vorhandenen Trägerfrequenzsystemen Z12 oder Z60 ausgegangen werden.

Kabel mit Lichtleitfasern können ohne Störungen aufzunehmen unmittelbar neben Starkstromleitungen verlegt sein.

Anhand von Ausführungsbeispielen wird die Erfindung nachstehend näher erläutert.

Fig. 1 zeigt ein erfindungsgemäßes Nachrichtenübertragungssystem und

Fig. 2 zeigt eine Zwischenstelle für das Nachrichtenübertragungssystem nach Fig. 1.

Fig. 1 zeigt eine Endstelle I und eine Endstelle II, die durch eine Lichtleitfaser 9 miteinander verbunden sind.

0058764

Die Endstelle I enthält einen Sendeteil 1, einen FM-Modulator 2, einen elektro-optischen Umsetzer 3, eine optische Verzweigung 8, einen opto-elektrischen Umsetzer 7, einen FM-Demodulator 6, ein Bandpaßfilter 5 und einen Empfangsteil 4. Die Endstelle II enthält einen Sendeteil 3, einen FM-Modulator 12, einen elektro-optischen Umsetzer 11, einen optischen Verzweiger 10, einen opto-elektrischen Umsetzer 14, einen FM-Demodulator 15, ein Bandpaßfilter 16 und einen Empfangsteil 17.

Der Sendeteil 1 gibt ein Frequenzmultiplexsignal mit 12 Kanälen im Frequenzbereich von 60 bis 108 kHz ab. Dieses Frequenzband wird im FM-Modulator 2 in ein frequenzmoduliertes Signal mit einer mittleren Frequenz von 10 MHz umgesetzt. Der elektro-optische Umsetzer 3 setzt dieses Signal in ein optisches Signal um, das über den optischen Verzweiger 8 in die Lichtleitfaser 9 eingespeist wird. In der Endstelle II gelangt dieses Signal über den optischen Verzweiger 10, über den opto-elektrischen Umsetzer 14, über den FM-Demodulator 15 und über das Bandpaßfilter 16 zum Empfangsteil 17. Der Sendeteil 13 dieser Endstelle II sendet seinerseits ein Multiplexsignal im Frequenzbereich von 6 bis 54 kHz aus, das ebenfalls 12 Kanäle enthält, über den FM-Modulator 12, über den elektro-optischen Umsetzer 11, über den optischen Verzweiger 10, über die Lichtleitfaser 9, über den optischen Verzweiger 8, über den opto-elektrischen Umsetzer 7, über den FM-Demodulator 6 und über das Bandpaßfilter 5 zum Empfangsteil 4 der Endstelle I.

Die optischen Verzweiger 8 und 10 stellen keine ideale Frequenzweiche dar. Zwar kann in die elektro-optischen Umsetzer 3 und 11 in Gegenrichtung kein Signal eingespeist werden, jedoch gelangen Signale vom Ausgang der elektrooptischen Wandler 3 und 11 mit einer Dämpfung von 30 db jeweils zu den Eingängen der opto-elektrischen Umsetzer 7 bzw. 14 in derselben Endstelle I bzw. II. Nimmt man am Ausgang des elektro-optischen Umsetzers 11 einen Signalpegel von -15 dbm an, so beträgt dieser am gemeinsamen Anschluß des optischen Verzweigers 10 -23,5dbm. Nimmt man weiter eine Dämpfung von 10 db längs der Lichtleitfaser 9 an, so beträgt der Signalpegel am gemeinsamen Anschluß des optischen Verzweigers 8 -34 dbm und am Abzweigungs-Anschluß -42,5 dbm. Am Eingang des opto-elektrischen Umsetzers 7 liegt daher das erwünschte und das unerwünschte Signal mit etwa gleichem Pegel an, so daß beide im opto-elektrischen Umsetzer 7 und im FM-Demodulator 6 verarbeitet werden können. Da das Bandpaßfilter 5 jedoch nur das erwünschte Signal im Frequenzbereich von 6 bis 54 kHz durchläßt, wird das Nebensprechen eliminiert.

Der Erfindung liegt die Erkenntnis zugrunde, daß die schlechten Entkopplungseigenschaften eines optischen Verzweigers in einfacher Weise durch ein derartiges Filter eliminiert werden können.

Fig. 2 zeigt eine Zwischenstelle III, in der der Duplex-Betrieb über optische Verzweiger 18 und 22 auf zwei Lichtleitfasern aufgespaltet wird. Ein Übertragungsweg enthält einen opto-elektrischen Umsetzer 2', einen FM-Demodulator 3', ein Bandpaßfilter 19, einen Verstärker bzw. Regenerator 20, einen FM-Modulator 14' und einen elektro-optischen Umsetzer 15'. In der Gegenrichtung ist ein opto-elektrischer Umsetzer 12', ein FM-Demodulator 11', ein Bandpaßfilter 22, ein Verstärker bzw. Regenerator 21, ein FM-Modulator 7' und ein elektrooptischer Umsetzer 6' vorgesehen. Die Bandpaßfilter 19 und 22 sind jeweils so dimensioniert, daß sie die

- 6 -    VPA    81 P 6421 E

Signale der Übertragungsrichtung durchlassen und Signale
der Gegenrichtung, die durch Nebensprechen auftauchen,
sperren.

3 Patentansprüche
2 Figuren

Patentansprüche

1. Nachrichtenübertragungssystem
mit einer ersten Endstelle, deren Sendeteil Signale
in einer ersten Frequenzlage aussendet und deren Empfangsteil Signale in einer zweiten Frequenzlage empfängt, und
mit einer zweiten Endstelle, deren Sendeteil Signale in
der zweiten Frequenzlage aussendet und deren Empfangsteil Signale in der ersten Frequenzlage empfängt,
d a d u r c h   g e k e n n z e i c h n e t ,
daß als Übertragungsmedium eine Lichtleitfaser (9) vorgesehen ist,
daß an jedem Ende dieser einen Lichtleitfaser (9) ein
optischer Verzweiger (8, 10) mit seinem gemeinsamen Anschluß angeschlossen ist,
daß jeder Sendeteil (1, 13) über einen FM-Modulator (2,12)
und einen elektro-optischen Umsetzer (3, 11) mit einem
Abzweigungs-Anschluß des zugeordneten optischen Verzweigers (8, 10) verbunden ist,
daß der andere Abzweigungs-Anschluß beider optischer Verzweiger (8, 10) über einen opto-elektrischen Umsetzer (7,14)
und einen FM-Demodulator (6, 15) mit dem zugeordneten
Empfangsteil (4, 17) verbunden ist und
daß zwischen diesem anderen Abzweigungs-Anschluß beider
optischer Verzweiger (8, 10) und den zugeordneten Empfangsteilen (4, 17) jeweils entweder im elektrischen Weg ein
elektrisches (5, 16) oder im optischen Weg ein optisches
Filter zur Sperrung der Frequenzlage der Gegenrichtung
vorgesehen ist.

2. Nachrichtenübertragungssystem nach Anspruch 1,
d a d u r c h   g e k e n n z e i c h n e t ,
daß längs der einen Lichtleitfaser (9) Zwischenstellen (III)
vorgesehen sind, in denen ein eingangs- und ein ausgangsseitiger optischer Verzweiger (18, 23) zwei Übertragungswege gegensätzlicher Übertragungsrichtung bilden, in denen Mittel zur Verstärkung und/oder Regeneration (20,21) und elektrische (19, 22) oder optische Filter zur Sperrung der Frequenzlage der Gegenrichtung vorgesehen sind.

3. Nachrichtenübertragungssystem nach Anspruch 1 oder 2, g e k e n n z e i c h n e t   d u r c h   die Verwendung von Endstellen der Trägerfrequenzsysteme Z12 oder Z60.

# FIG 1

# FIG 2